# EUROPEAN PATENT APPLICATION

(11) **EP 4 715 198 A1**
(43) Date of publication of application: **25.03.2026**
(21) Application number: 23938323.5
(22) Date of filing: 19.05.2023
(51) Int. Cl.: F03D 13/10, F03D 13/25, F03D 13/40

(54) **METHOD FOR ASSEMBLING AN OFFSHORE WIND TURBINE AND SYSTEMS ASSOCIATED WITH THE ASSEMBLY THEREOF**

(71) Applicant: Nabrawind Technologies, S.L., 31002 Pamplona (ES); Ingecid, Investigación Y Desarrollo de Proyectos, S.L., 39005 Santander (ES)
(72) Inventor: SANZ PASCUAL, Eneko, 31002 Pamplona (ES); AROCENA DE LA RÚA, Ion, 31001 Pamplona (ES); MARTÍ GASTALDO, Juan José, 28017 Madrid (ES); RICO ARENAL, Jokin, 39005 Santander (ES); NISTAL IGLESISAS, Pablo, 39005 Santander (ES); RUIZ RAMOS, Marta, 39740 Santoña (ES)
(86) International application number: PCT/ES2023/070322
(87) International publication number: WO 2024/240966

(57) **Abstract**

The invention relates to a method for assembling an offshore wind turbine that is separated in two parts that are pre-assembled in a port: a jacket-type lattice structure (15) anchored to the seabed with a foundation and a superstructure that includes a transition piece (4), a tower (1), a nacelle (2) and blades (3) transported floating in a vertical position. Tripod supports (5) are anchored on the double-pontoon vessel (8) that is braced (9) at the bow and stern, and a triangle (7) supporting the superstructure is disposed in the tripod supports.

During the transport phase, the hydraulics (14) included in the inside the tripod supports (5) are retracted, the movable parts are connected by a bolted joint, and the vessel (8) is ballasted. Once the positioning of the jacked (15) has been carried out, both parts are fastened by moorings (16), movement limiters (18) and impact limiters (18'), the load is transferred with the lowering of the hydraulic cylinders (14), and contact occurs between the upper portion of the jacket (15) and the receiver of the passive coupling system (23). Once the assembly is complete, the passive coupling system (23) arranged on the transition piece is recovered, the triangle (7) is dismantled, and the bracing (9) of the stern is folded down or removed to release the vessel (8).

## Description

### Field of invention

The present invention focuses on the assembly of an offshore wind turbine (WTG), through an initial phase of installing the jacket substructure anchored to the seabed, and the subsequent coupling of the assembly consisting of the transition piece, tower and wind turbine (hereinafter, superstructure), previously assembled and transported vertically on a double-pontoon vessel.

The main features of this invention are the transfer and coupling of the superstructure onto the jacket, along with its assembly method and associated systems on the double-pontoon vessel. The structure includes: a preferably triangular support, but which can also be square for the superstructure, beams at the stern and bow for bracing the vessel, a hydraulic lifting system, a jacket mooring system, movement limiters and a coupling and damping system.

### Background of the invention

One of the most common foundations for offshore wind turbines is the lattice structure, also known as a jacket. The jacket solution requires very expensive transport and installation, using specialized vessels (jack-up vessels). In order to find more economical and faster solutions, different methods have been developed to vertically assemble and transport the upper part of the wind turbine with the help of reinforcement structures. The following patents are cited as prior art: US2011139056A, CN112814014A, CN109185071A, WO2020256247A1, WO2014204372A1, and WO2022203518A1. These assembly methods are not for jackets, but primarily for monopiles.

The assembly problems arise from the motion generated by the waves on the vessel, which are transferred to the vertically transported wind turbine, and from the overturning moment due to its centre of gravity being very high relative to the vessel. To solve this problem, shock-absorbing elements and elements that facilitate lifting and coupling are included. The method of supporting and securing the WTG on the vessels or barges is also of great importance.

Furthermore, the process of raising and lowering the superstructure assembled on the jacket can be performed with hydraulic elements such as those mentioned in patent KR20160037280A. Equivalent systems such as strand jacks or rack-and-pinion systems can also be used, but their effectiveness will depend on their location, the auxiliary elements that assist in their task, and the economic viability of the system's cost within the limitations imposed by the saline climate.

Patent WO2009080035 describes the vertical transport and upper assembly of several WTGs, ballasting the barges that transport them. The main differences are the tripods that incorporate the lifting and lowering system and that support the superstructure, the double barge used, the securing and mooring systems, and the fact that only one WTG is transported.

The invention therefore considers the installation of the superstructure with a non-self-propelled vessel, which incorporates innovative auxiliary systems to solve the problems arising from sea motion and overturning moments. The assembly method achieves a reduction in time, becoming an alternative to jack-vessels at great depths.

### Description of the invention

The object of the invention is to assemble an offshore WTG with two distinct parts: the substructure corresponding to the lower part, consisting of a lattice structure anchored to the seabed, known as the jacket, and the superstructure corresponding to the upper part, which includes the transition piece, the tower, the nacelle and the blades, all pre-assembled. The substructure is transported horizontally on a vessel and launched into the sea and turned over before anchoring. The superstructure is transported floating vertically on a double-pontoon vessel and assembled on the jacket previously anchored to the seabed. The superstructure is pre-assembled in port, transferred to the double-pontoon vessel, and assembled directly on tripod supports.

Another object of the invention is that the superstructure includes the tower, nacelle and blades supported on a three-legged transition. All of this is transported connected to a triangle anchored to the tripod supports of the double-pontoon vessel, which includes bracing beams at the bow and stern. If the jacket has four legs, the piece that connects to the superstructure on the tripod supports is a square.

Another object of the invention is for the double-pontoon vessel that floats the superstructure to have on board a mooring system to the jacket, preferably with cables, impact limiters to reduce the impacts transferred to the substructure when placed on the jacket, and movement limiters to enable the coupling of the substructure and superstructure.

Another object of the invention is for the coupling and damping system to be recoverable and reusable thanks to its location, configuration, and attachment to the transition piece.

Another object is the hydraulic lifting system arranged in the tripod supports of the double-pontoon vessel, which enables the rapid raising of the superstructure prior to approaching the jacket, in order to pass over it, and which enables the rapid lowering of the superstructure during coupling to reduce the duration of this manoeuvre and thus the impacts on the jacket. The hydraulics, as a complementary function, can be compensated during navigation to avoid the effect of the sea. They also do so during assembly. There are two practical embodiments for securing the upper part of the WTG to the triangle resting on the three tripod supports of the double-pontoon boat.

All this is achieved with at least two pontoons braced together, which are ballasted during transport, emptied during positioning, and re-ballasted according to the assembly method described in the practical embodiment. The bracing system is configured by a preferably elevated beam, although it could also be foldable, allowing passage over the jacket without impacting it, and by another removable or foldable beam, to allow the double-pontoon boat to exit once the substructure and superstructure have been coupled.

The following advantages emerge from all of the above. The present invention enables the installation of WTGs with a jacket substructure at depths greater than 60 m, where current installation methods (jack-up) are currently largely unavailable. This type of solution, installed using the method of the invention, results in a CAPEX reduction of up to 30% compared to floating solutions. These vessels, based on pontoons currently on the market, are easier to build than the jack-up currently used, which would increase the availability of wind farm installation equipment. Furthermore, the method of the invention reduces the number of operations at sea, as the superstructure is already assembled. It is a solution developed for depths greater than 50 meters and preferably between 60 and 100 meters, since the global shelf at that depth is very extensive.

### Brief description of the drawings

A brief description will be given below for a series of drawings useful for better understanding the invention and that expressly relate to an embodiment of said invention that is presented as a non-limiting example thereof.
Figure 1 shows a perspective view of the superstructure on the double-pontoon vessel.
Figure 2 represents a profile view of Figure 1, with a cutaway view of the upper portion.
Figure 3 represents an elevation view of Figure 1, with a cutaway view of the upper portion.
Figure 4 shows a possible configuration of the jacket mooring systems and the movement and impact limiters to reduce relative movements between the vessel and the jacket.
Figure 5 is a plan view of the double-pontoon boat, its front and rear bracing, and the arrangement of the transition piece on the triangle and the tripod supports.
Figure 6 is a partial perspective view of the WTG support on the boat and a detail of the fastening of the transition piece and superstructure to the tripod supports connected by the triangle.
Figure 7 is a second embodiment of the attachment between the tripod and triangle supports and the superstructure.
Figure 8 is a sectional view of the reusable damping system.
Figure 9 shows the sequence of approach and coupling of the superstructure to the substructure.
Figure 10 shows the sequence of completion of the assembly process.

### Detailed Description of the invention

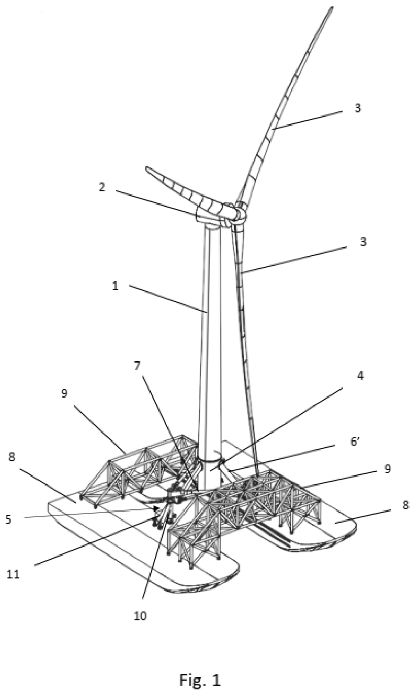

As shown in Figure 1, the superstructure includes the tower (1), the nacelle (2), the blades (3), and the transition piece (4). Supporting all of the above and forming part of the double-pontoon (8) and doubly braced (9) vessel is a tripod-shaped support (5) resting on tubular elements: a main one (10) vertical and two supporting (11) inclined with respect to the main one. The three tripod supports (5) are crowned and joined by a triangle (7), which is assembled and disassembled during the process The transition piece (4) is completed with three bracing posts (6') and six radial posts (6"). All of these elements are pre-assembled in the dock on the vessel (8).

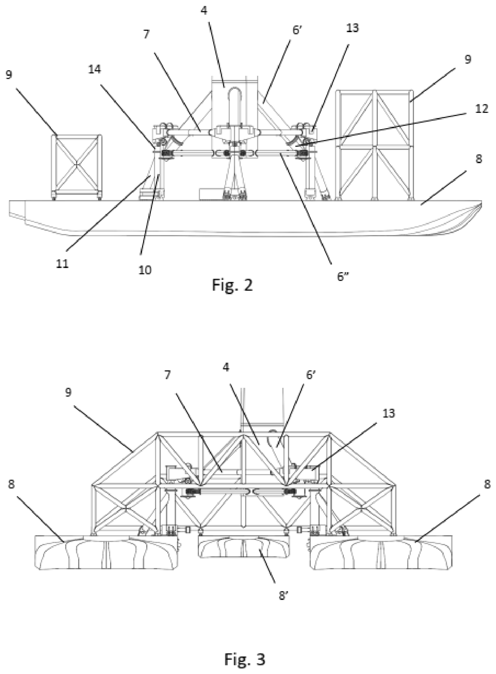

Figure 2 shows how in the transition (4), each bracing post (6') extends from a corner connector (12) to the transition wall (4). The six radial posts (6") extend in pairs horizontally from the corner connector (12) to the bottom of the transition wall (4). Regarding the tubular elements of the tripod support (5): the main one (10) is fixed between the deck of the double-pontoon boat (8) and the vertex (13) of the triangle (7) that supports the WTG and the two support ones (11) are fixed between the deck of said boat (8) and the wall of the main tubular element (10), forming a V. The tripod support (5), in its main tubular element (10), includes hydraulic elements (14) or similar inside its upper part. The bracings (9) are arranged on the double-pontoon boat (8) and are formed by beams, preferably a lattice structure. Figure 3 shows a practical embodiment in which the rear bracing (9) rests on an auxiliary pontoon (8'), which can be replaced by a folding bracing that does not require the use of said auxiliary pontoon (8'). The front bracing (9) is more robust and taller than the rear one to facilitate access to the jacket (15) during assembly.

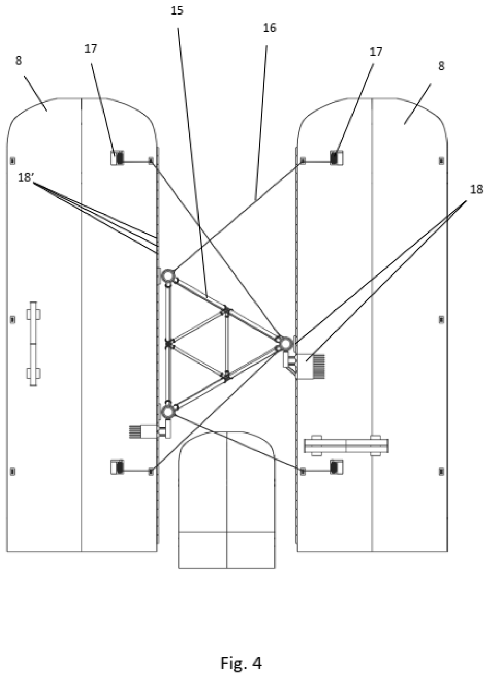

As shown in Figure 4, the jacket (15) is formed by an equilateral triangle. The double-pontoon vessel (8) is positioned with one side of the jacket (15) parallel to one of its pontoons, and the post corresponding to the opposite vertex of the jacket (15) is arranged in contact with the other pontoon. With the jacket (15) fixed, the vessel (8) is moored to guide entry and limit movement during docking. Each jacket (15) post is secured to the opposite vessel (8) with a cable-type or similar mooring system (16), and the fastening is secured by turnbuckles (17) arranged on board the vessel (8). Movement limiters (18) act against the posts of the jacket (15) by means of thrusters, some acting in one direction and others in a perpendicular direction, which protrude over the side of the vessel (8), ensuring, together with the moorings (16), that there is no relative movement between the two assemblies. And the impact limiters (18') are arranged parallel to the boat (8), covering the entire gunwale. The difference is that the movement limiters (18) leave more space between the jacket (15) and the boat (8) to allow for more movement, but they act as shock absorbers in the event of an impact.

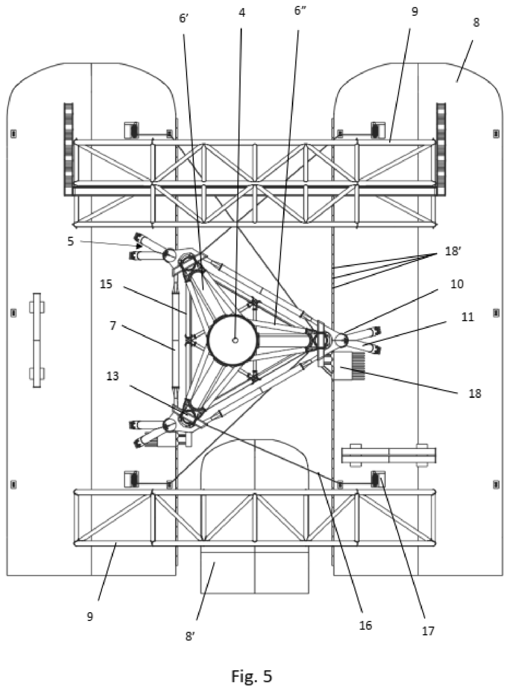

Figure 5 shows the complete double-pontoon boat (8) carrying the superstructure (for clarity purposes, the tower, nacelle, and blades are not included). The mooring systems (16) and the movement limiters (18) and impact limiters are attached to the boat (8). The transition (4) formed by the hollow tubular piece with three bracing posts (6') and six radial posts (6") arranged horizontally, are supported on the triangle (7) of which both its sides and its vertices (13) are removable. Said triangle (7) and more specifically its vertices (13) rest on the tripod supports (5) and the tubular elements that form it: one main (10) and two support (11) for each vertex (13). **In** the double-pontoon vessel (8), the pontoons are braced (9) together at both the bow and stern. At the stern, an auxiliary pontoon (8') or a folding braced structure (9) is used to release the WTG once assembled.

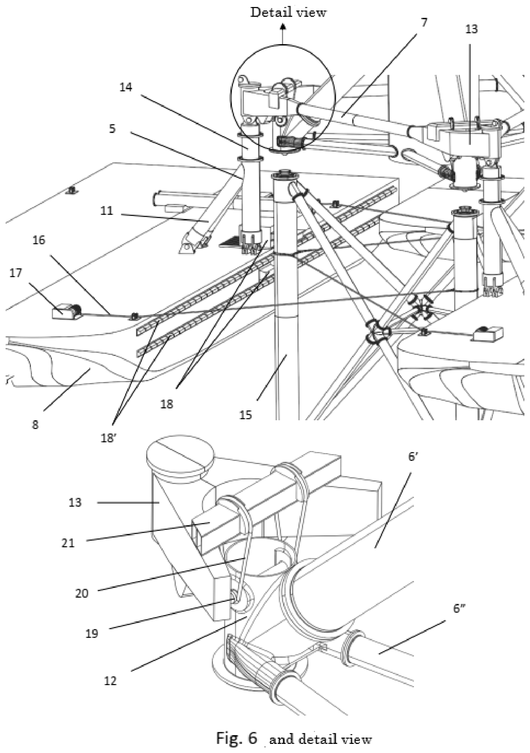

Figure 6 shows a perspective view of one of the pontoons of the vessel (8) receiving the superstructure and preparing for assembly. The movement limiter (18) and the impact limiter (18'), arranged on the side of the vessel (8), and the mooring system (16) with its turnbuckle (17), act on the post of the jacket (15), ensuring a minimum acceptable movement between them. The three hydraulic systems (14) within the main tubular elements (10) of the three tripod supports (5) raise and lower the triangle (7). The aforementioned triangle (7) is fixed through its vertices (13) to the tripod supports (5) and to the corner connector (12), from which the bracing posts (6') and the radial posts (6") that form part of the transition (4) emerge. The corner connector (12) has a vertical post crossed by a horizontal bolt (19) that facilitates anchoring to the vertex (13) of the triangle (7). The coupling system referred to below is located inside the aforementioned vertical post of the corner connector (12).

The detail in Figure 6 shows a practical embodiment in which the bolt (19) is supported by slings (20) that, due to the number of wires comprising them, have great flexibility. The slings (20) hang from a beam (21) resting on the vertex (13) of the triangle (7).

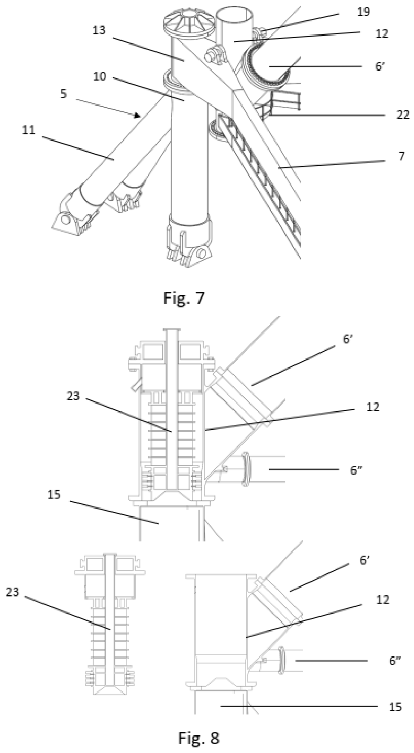

**In** a second practical embodiment shown in Figure 7, the bolt (19), which passes through the vertical post of the corner connector (12), protrudes on both sides and rests directly on the vertex (13) of the triangle (7). This figure shows how the transition has a platform (22) that extends across its entire base, where people can walk on it.

As shown in Figure 8, the corner connector (12) has a passive coupling system (23) inside, with horizontal dampers at the bottom and vertical dampers in the centre. These shock absorbers are made of elastomeric materials that absorb the impacts produced by contact with the jacket (15). The inner wall of the vertical post of the corner connector (12) is smooth and has a geometry that allows the installation and removal of the passive coupling system (23), which is secured by a bolted connection. Since it is recoverable, being extracted from the top after emptying an internal tank, it can be used in subsequent assemblies.

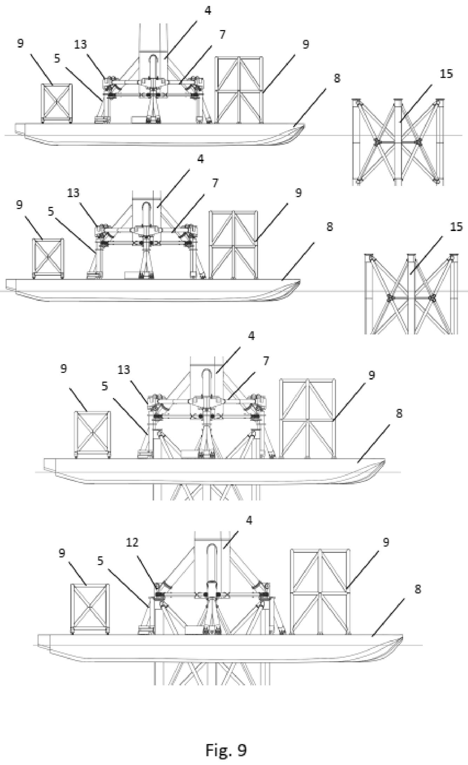

Figure 9 shows the assembly process. The triangular structure (7) rests on the three hydraulic cylinders (14) included in the tripod supports (5) arranged on the double-pontoon boat (8). Due to the triangular nature (7) of the structure, one of the pontoons receives a vertical support bracket and the opposite pontoon receives two. The double-pontoon boat (8) is ballasted for greater stability. When the hydraulic cylinders (14) are fully retracted, the triangular structure (7) rests on the tripod supports (5). To limit vertical movements of the superstructure supporting the WTG (especially critical during the transport phase), slings or moorings are arranged from the boat (8) to both sides of the legs of the transition piece (4), which prevent the superstructure from lifting. In addition, horizontal movement is restricted by lateral cylinders located on the triangular structure (7) that exert pressure on the corner connector (12). During the transport phase, the hydraulic cylinders (14) are fully retracted, and the moving parts are bolted together to secure them.

**In** the embodiment shown in Figure 6, the superstructure is suspended from the triangle (7) by slings, and additional slings are provided from the vessel to the corner members (13) to prevent the structure from lifting during transport. Lateral hydraulic cylinders are arranged within the triangular structure (7) and exert pressure on the corner connector (12). **In** the second embodiment, shown in Figure 7, the slings or moorings and lateral hydraulic cylinders are not necessary, as movement is already impeded by the nature of the connection between the corner connector (12) and the triangle (7). The vertical hydraulic cylinders (14) are fully retracted during transport, and the relative movement of the triangle (7) with the tripod support (5) is restricted by a bolted connection.

Before approaching the jacket (15), this connection is removed, the cylinders (14) are raised, and the vessel (8) is de-ballasted to provide sufficient entry height to prevent impacts with the jacket (15). The entry or approach phase is guided by the jacket (15) mooring system and by tugboats. To limit the effects of possible impacts between the vessel (8) and the jacket (15) during the approach, the vessel (8) is fitted with movement limiters (18) on the inside of the vessel. A second embodiment could be for these limiters to be placed on the jacket (15).

Once the proper position for docking is reached, the mooring system (16) is positioned to facilitate docking, and the movement limiters (18) and impact limiters (18') are positioned to reduce relative movements between the vessel (8) and the jacket (15).

Once the vessel (8) is positioned on the jacket (15), the load transfer takes place. Upon completion of this process, the transition piece (4) becomes independent of the triangle (7). In the embodiment shown in Figure 6, when the superstructure rests on the jacket (15), it is lowered from the bolt (19) while the triangle (7) remains attached to the support structure (5). In the case of the embodiment shown in Figure 7, since the connection between the triangle (7) and the superstructure is rigid, when the superstructure rests on the jacket (15), the triangle (7) remains suspended, detaching itself from the hydraulics (14), leaving the triangle (7) independent of the vessel (8). In both cases, the triangle (7) must be removed to complete the installation. In the case of the embodiment shown in Figure 6, the triangle must be removed before the removal phase in order to exit. In the case of the embodiment shown in Figure 7, the triangle (7) can be removed at any time, as it becomes independent of the vessel (8).

As the superstructure descends onto the jacket (15), contact occurs between the top of the jacket (15) and the passive coupling system receiver (23). The vertical and horizontal elastomers absorb the stresses caused by this contact. The receiver cone guides the part to the desired joining position, allowing for some flexibility in initial positioning.

This process continues until the load transfer is complete, at which point the superstructure rests on the jacket (15), the vertical elastomer is compressed, and a gap remains between the sleeve of the transition part and the jacket (15). This space allows the elastomers to compress further if a dynamic load exceeds the design static load during load transfer, mitigating the impact and preventing direct contact. To join the transition piece and the jacket in a controlled manner once the load transfer has been completed and to ensure the superstructure is independent of the vessel's (8) movements, sand is extracted from the tank through the side of the passive coupling system (23) via the valve, which lowers the transition piece (4) until it makes contact with the jacket shell (15). To remove the passive coupling system (23), the sand extraction valve (threaded connection) and the bolted connection (19) between the transition piece sleeve and the passive coupling system (23) are removed. The latter is lifted by means of the trunnions using a crane, and removed from the top. Once the assembly process is complete, the triangle (7) is removed using a crane that can be on the vessel (8) itself or on an auxiliary vessel.

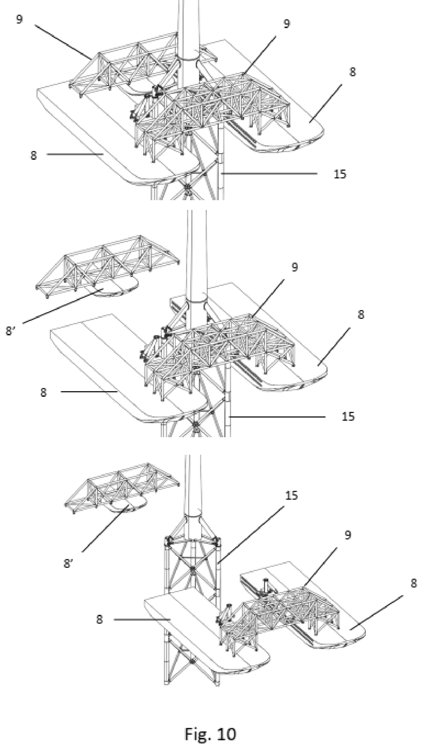

Figure 10 shows how the stern braced structure (9) is completely detached with the auxiliary pontoon (8'), allowing the double-pontoon vessel (8) to release the fully assembled WTG. **In** another practical embodiment, the stern braced structure (9) is folded down over one of the pontoons (8), releasing the WTG.

## Claims

1. Method for assembling an offshore wind turbine that is separated in two parts that are pre-assembled in a port and are transported floating in a vessel that has ballast equipment: a jacket-type lattice structure (15) anchored to the seabed with a foundation and a superstructure that includes a transition piece (4), a tower (1), a nacelle (2) and blades (3) transported in a vertical position, **characterised in that**:
- it is assembled on board of a double-pontoon boat (8) braced (9) at the bow and stern, tripod supports (5), on the tripod supports (5) a triangle (7) or equivalent element such as a square is arranged, supporting the superstructure, all secured in a fixed joint, where one of the pontoons (8) receives one of the tripod supports (5) and the opposite pontoon (8) receives two,
- it is transported on the water to the substructure, during this the transport phase, the hydraulics of the lifting system (14) included in the inside the tripod supports (5) are retracted, the movable parts are connected by a bolted joint, and the vessel (8) is ballasted,
- the double-pontoon vessel (8) removes the ballast, extends the hydraulics and raises the bracing (9), to pass over the jacket (15), or alternatively the bracing (9) is folded down and passes over the jacket (15),
- once positioning is done, the vessel (8) is fixed to the jacket (15) by means of the mooring system (16), the movement limiter (18) and the impact limiter (18'), slings or moorings are arranged from the boat (8) to both sides of the legs of the transition piece (4), the load is transferred by ballasting the vessel (8) and lowering the hydraulic cylinders (14), and contact is made between the upper part of the jacket (15) and the receiver of the passive coupling system (23) that cushions the union,
- once the assembly is complete, the passive coupling system (23) arranged on the transition piece (4) is recovered, the triangle (7) or equivalent element is dismantled, and the bracing (9) of the stern is folded down or removed to release the vessel (8).

2. Method for assembling an offshore wind turbine according to claim 1, **characterized in that** during the transport phase:
- the connection between the triangle (7) and the transition piece (4) can be fixed by means of a bolt or slings and moorings can be arranged from the vessel (8) to both sides of the legs of the transition piece (4) to limit the vertical movements of the superstructure supporting the WTG and prevent it from being lifted.

3. Method for assembling an offshore wind turbine according to claim 1, **characterized in that** each pontoon (8) is secured with a cable-type or similar mooring system (16) to the opposite jacket column (15), and the fastening is secured by means of turnbuckles (17) arranged on board the vessel (8), movement limiters (18) protrude over the side of the vessel (8) and act, in one direction and perpendicularly, against the jacket posts (15), ensuring, together with the moorings (16), that there is no relative movement between both assemblies.

4. Method for assembling an offshore wind turbine according to claim 1, **characterized in that** during the load transfer, the receiving cone of the passive coupling system (23) guides the piece to the desired joining position, allowing a certain flexibility in initial positioning, the vertical elastomer is compressed and there is a space between the sleeve of the transition piece (4) and the jacket (15), this space allows the elastomers to be compressed further, attenuating the impact and preventing direct contact.

5. Method for assembling an offshore wind turbine according to claim 1, **characterized in that** once the assembly is completed, the sand is extracted from the tank through the side of the passive coupling system (23) via the valve, which lowers the transition (4) until it comes into contact with the jacket (15), the sand extraction valve and the bolted union (19) between the jacket of the transition piece and the passive coupling system (23) are removed and it is lifted and extracted from its upper part by means of the trunnions with a crane.

6. Associated systems in the assembly of an offshore wind turbine that achieve the transport, elevation and lowering of the superstructure on the substructure or jacket (15) in a controlled manner, **characterized in that** all the systems are on board a double-pontoon vessel (8) braced (9) with a raised or folding lattice at the bow and stern and said systems are:
- tripod supports (5) that have in their upper part hydraulic systems (14) that raise and lower the triangle (7) or equivalent element with a square shape, where the superstructure is supported and joined, which includes a transition (4), a tower (1), a nacelle (2) and blades (3),
- a passive coupling system (23) and damping placed at the ends of the transition piece and which is recoverable at the end of the installation,
- a mooring system (16) and movement limiters (18) that act in both directions to reduce relative movements between the vessel (8) and the jacket (15) and,
- a transition (4) that gives rise to the superstructure, has at its lower ends fastening means to temporarily join to the vertices (13) of the triangle (7) or equivalent element and houses the coupling system (23) and damping inside the aforementioned ends.

7. Associated systems for the assembly of an offshore wind turbine according to claim 6, **characterized in that** the tripod supports (5) are tubular elements: the main one (10) is fixed between the deck of the vessel (8) and the vertex (13) of the triangle (7), and the two support ones (11) are fixed between the deck of the vessel (8) and the main support wall (10), forming a V.

8. Associated systems for the assembly of an offshore wind turbine according to claim 6, **characterized in that** the union of the triangle (7) with the transition (4) of the superstructure is carried out with a bolt (19) that is supported on slings (20) that hang from a beam (21) resting on the vertex (13) of the triangle (7) or with a bolt (19) that passes through the vertical column of the corner connector (12), which protrudes on both sides and rests directly on the vertex (13) of the triangle (7).

9. Associated systems for the assembly of an offshore wind turbine according to the preceding claim, **characterized in that**, when the superstructure is supported on the jacket (15), it is lowered from the bolt (19) while the triangle (7) remains coupled to the support structure (5) or, in a second embodiment, as the connection between the triangle (7) and the superstructure is rigid, when the superstructure is supported on the jacket (15) and the vessel (8) is lowered, the triangle (7) remains hanging, detaching itself from the hydraulics (14) and therefore the triangle (7) remains independent of the vessel (8).

10. Associated systems for the assembly of an offshore wind turbine according to claim 6, **characterized in that** the passive coupling system (23) is formed by elastomeric materials that absorb the impacts produced by contact with the jacket (15), it has a configuration such that it generates a space between the sleeve of the transition piece (4) and the jacket (15) once the load transition is completed, it has a sand tank and a valve for extracting it, and it has trunnions for its removal by crane.

11. Associated systems for the assembly of an offshore wind turbine according to claim 6, **characterized in that**, in the double-pontoon vessel (8), one of the pontoons (8) is fastened with a cable-type mooring system (16) or similar, to the post of the opposite jacket (15), and the fastening is secured by means of turnbuckles (17), movement limiters (18) that protrude over the side of the vessel (8), some acting in one direction and others in the perpendicular direction, and impact limiters (18') arranged in parallel on the side of the vessel (8).
